# EUROPEAN PATENT APPLICATION

(11) **EP 4 765 857 A1**
(43) Date of publication of application: **24.06.2026**
(21) Application number: 24861628.6
(22) Date of filing: 27.06.2024
(51) Int. Cl.: H04Q 11/00

(54) **SENDING RATE CONFIGURATION METHOD AND DEVICE**

(30) Priority: 04.09.2023 CN 202311138845
(71) Applicant: ZTE CORPORATION, Shenzhen, Guangdong 518057 (CN)
(72) Inventor: ZHANG, Lin, Shenzhen, Guangdong 518057 (CN); WANG, Peng, Shenzhen, Guangdong 518057 (CN); CAI, Liyong, Shenzhen, Guangdong 518057 (CN); ZHANG, Weiliang, Shenzhen, Guangdong 518057 (CN)
(74) Representative: Chimini, Francesco
(86) International application number: PCT/CN2024/102080
(87) International publication number: WO 2025/050782

(57) **Abstract**

The present invention provides a sending rate configuration method and device. The method comprises: an optical line terminal (OLT) sends a configuration message to an optical network unit (ONU), wherein the configuration message is used for indicating an uplink rate from the ONU to the OLT in an uplink rate set, and uplink rates in the uplink rate set include 1.25G and 2.5G.

## Description

### Cross-Reference to Related Application

The present disclosure is based on and claims priority to Chinese patent application 2023111388452 filed on September 4, 2023 and entitled "Rate Configuration Sending Method and Device", the disclosure of which is incorporated herein by reference in its entirety.

### Technical Field

The present disclosure relates to the field of communications, and in particular, to a rate configuration sending method and device.

### Background

With the continuous development of optical networks, Fiber to the Home (FTTH) has been widely deployed, and Optical Line Terminals (OLT) and Optical Network Units (ONU) in the FTTH have also been widely used. In Passive Optical Network (PON) systems, PON equipment can be divided into Gigabit-capable Passive Optical Network (GPON) equipment, 10-Gigabit-capable Passive Optical Networks (XGPON) equipment, 10-Gigabit-capable Symmetric Passive Optical Networks (XGSPON) equipment, Higher speed passive optical networks (HSPON) equipment, and future 100GPON equipment, 200GPON equipment, etc., according to different Transmission Convergence (TC) layer protocols. The architecture of these Passive Optical Network (PON) systems generally includes an OLT, ONUs, and an Optical Distribution Network (ODN).

In related technologies, in a Fiber to the Room (FTTR) scenario, an upstream rate from the ONUs to the OLT is 1.25G, while a downstream rate from the OLT to the ONUs is 2.5G, which means that the upstream rate and downstream rate are asymmetric. There is no effective solution provided for how to enable the upstream rate from the ONUs to the OLT to be 2.5G, thereby achieving 2.5G symmetry. How to achieve an upstream rate of 2.5G from the ONUs to the OLT in the FTTR scenario has become a problem that needs to be solved.

### Summary

Embodiments of the present disclosure provide a rate configuration sending method and device, which may at least solve the problem in the related technologies that an ONU cannot operate at an upstream rate of 2.5G.

According to an embodiment of the present disclosure, provided is a rate configuration sending method, including: sending, by an Optical Line Terminal (OLT), a configuration message to an Optical Network Unit (ONU), wherein the configuration message is used for indicating an upstream rate from the ONU to the OLT in an upstream rate set, and upstream rates in the upstream rate set include 1.25G and 2.5G.

According to another embodiment of the present disclosure, provided is a rate configuration executing method, including: receiving, by an Optical Network Unit (ONU), a configuration message sent by an Optical Line Terminal (OLT); and configuring, by the ONU, an upstream rate according to the configuration message, wherein the configuration message is used for indicating an upstream rate from the ONU to the OLT in an upstream rate set, and upstream rates in the upstream rate set include 1.25G and 2.5G.

According to still another embodiment of the present disclosure, provided is a rate configuration sending device, including: a sending module, configured to send a configuration message to an Optical Network Unit (ONU), wherein the configuration message is used for indicating an upstream rate from the ONU to an Optical Line Terminal (OLT) in an upstream rate set, and upstream rates in the upstream rate set include 1.25G and 2.5G.

According to yet another embodiment of the present disclosure, provided is a rate configuration executing device, including: a receiving module, configured to receive a configuration message sent by an Optical Line Terminal (OLT); and a configuration module, configured to configure an upstream rate according to the configuration message, wherein the configuration message is used for indicating an upstream rate from an Optical Network Unit (ONU) to the OLT in an upstream rate set, and upstream rates in the upstream rate set include 1.25G and 2.5G.

According to yet another embodiment of the present disclosure, also provided is a computer-readable storage medium. The computer-readable storage medium stores a computer program, wherein the computer program, when running, is configured to execute operations of any one of the method embodiments.

According to yet another embodiment of the present disclosure, also provided is an electronic device, including a memory, and a processor, wherein a computer program is stored on the memory, and the processor is configured to run the computer program so as to execute operations of any one of the method embodiments.

### Brief Description of the Drawings

Fig. 1 is a block diagram illustrating the hardware structure of a computer terminal for a rate configuration sending method according to one or more embodiments of the present disclosure;
Fig. 2 is a flowchart of a rate configuration sending method according to an embodiment of the present disclosure;
Fig. 3 is a flowchart of a rate configuration executing method according to another embodiment of the present disclosure;
Fig. 4 is a structure block diagram of a rate configuration sending device according to an embodiment of the present disclosure;
Fig. 5 is a structure block diagram of a rate configuration executing device according to another embodiment of the present disclosure;
Fig. 6 is a flowchart of a method for achieving 2.5G symmetry in an FTTR scenario I according to an embodiment of the present disclosure;
Fig. 7 is a flowchart of a method for achieving 2.5G symmetry in an FTTR scenario II according to an embodiment of the present disclosure; and
Fig. 8 is a flowchart of a method for achieving 2.5G symmetry in an FTTR scenario III according to an embodiment of the present disclosure.

### Detailed Description of the Embodiments

Embodiments of the present disclosure will be described in detail below with reference to the accompanying drawings and in conjunction with the embodiments.

It should be noted that the terms "first", "second", etc. in the description and claims of the present disclosure and the above drawings are used to distinguish similar objects, and are not necessarily used to describe a specific order or sequence.

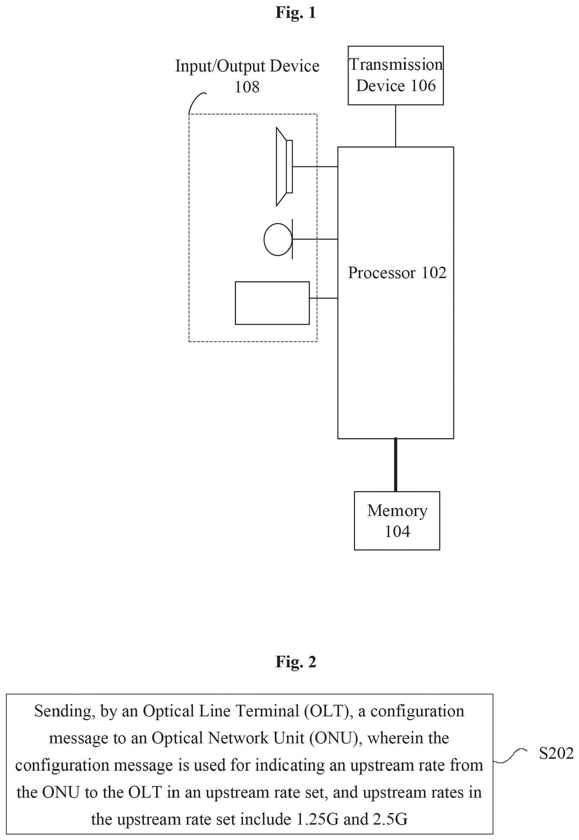

Method embodiments provided in the embodiments of the present disclosure can be executed on a mobile terminal, a computer terminal, or a similar computing device. Taking running on a mobile terminal as an example, Fig. 1 is a block diagram illustrating the hardware structure of a computer terminal for a rate configuration sending method according to one or more embodiments of the present disclosure. As shown in Fig. 1, a computer terminal may include one or more processors 102 (only one is shown in Fig. 1) (the processor 102 may include, but is not limited to, a processing device such as a Microprocessor (MCU) or a Field Programmable Gate Array (FPGA)) and a memory 104 configured to store data. The computer terminal may further include a transmission device 106 configured for communication and an input/output device 108. Those skilled in the art will appreciate that the structure illustrated in Fig. 1 is merely schematic and does not limit the structure of the computer terminal. For example, the computer terminal may also include more or fewer components than those shown in Fig. 1, or have a different configuration.

The memory 104 is configured to store a computer program, for example, software programs and modules of application software, such as a computer program corresponding to the rate configuration sending method in the embodiments of the present disclosure. The processor 102 executes various functional applications and data processing by running the computer program stored in the memory 104, thereby implementing the methods described above. The memory 104 may include a high-speed random access memory, and may also include a non-volatile memory, such as one or more magnetic storage devices, flash memory, or other non-volatile solid-state memory. In some examples, the memory 104 may further include a memory remotely located relative to the processor 102, and the remote memory may be connected to the computer terminal via a network. Instances of the above network include, but are not limited to, the Internet, an intranet, a local area network, a mobile communication network, and combinations thereof.

The transmission device 106 is configured to receive or send data via a network. Specific instances of the above network may include a wireless network provided by a communication provider of the computer terminal. In an example, the transmission device 106 includes a Network Interface Controller (NIC), which can be connected to other network devices through a base station to communicate with the Internet. In an example, the transmission device 106 may be a Radio Frequency (RF) module, which is configured to communicate with the Internet wirelessly.

Fig. 2 is a flowchart of a rate configuration sending method according to an embodiment of the present disclosure. As shown in Fig. 2, the process includes the following operation S202.

In operation S202, an OLT sends a configuration message to an ONU, wherein the configuration message is used for indicating an upstream rate from the ONU to the OLT in an upstream rate set, and upstream rates in the upstream rate set include 1.25G and 2.5G.

It should be noted that all embodiments of the present disclosure can work in FTTR scenarios and G.fin series standards, and can also work in other scenarios, to which the present disclosure imposes no limitation.

In operation S202 of this embodiment, the configuration message includes: an Extended_Burst_Length message, an Upstream_Overhead message, or a custom private message.

In an exemplary embodiment, a value of an M-th octet of the configuration message being a first numerical value corresponds to 2.5G and 1.25G in the upstream rate set; and the value of the M-th octet of the configuration message being a second numerical value indicates 2.5G in the upstream rate set; wherein in a case where the value of the M-th octet of the configuration message is the first numerical value, a value of an X-th field of an N-th octet of the configuration message being a third numerical value indicates 2.5G in the upstream rate set, and the value of the X-th field of the N-th octet being a fourth numerical value indicates 1.25G in the upstream rate set; and wherein the M-th octet of the configuration message is an ONU identifier, and M and N are positive integers and M is not equal to N.

The configuration message in the embodiments of the present disclosure may include multiple forms. For example, in a case where the configuration message includes an Extended_Burst_Length message and an Upstream_Overhead message, the first octet of the Extended_Burst_Length message may be changed to an ONU-ID (i.e., ONU identifier). The definition of ONU-ID may be as shown in Table 1, and may also be defined as other suitable values, to which the embodiments of the present disclosure impose no limitation.

The specific definition of the Extended_Burst_Length message is as shown in Table 2. ONU-ID=255 supports upstream rates of 1.24416 Gbit/s and 2.48832 Gbit/s. The specific definition of the added u bit of the 10th octet is that a u bit value of 0 represents an upstream rate of 1.24416 Gbit/s, and a u bit value of 1 represents an upstream rate of 2.48832 Gbit/s. ONU-ID=254 represents an upstream rate of 2.48832 Gbit/s, ignoring the meaning of the u bit in the 10th octet, while carrying and delivering configuration values such as preamble and delimiter for different upstream rates.

**Table 1 - ONU-ID values**

| **ONU-ID** | **Designation** | **Comment** |
|---|---|---|
| 0..253 | Assignable | Assigned by OLT at ONU activation; used to identify the sender of an upstream burst or a PLOAMu, and to address PLOAMd. |
| 254 | Broadcast/Reserved | Broadcast address in PLOAMd; not used in PLOAMu. The number shall not be assigned to any ONU, and shall not be used as an ONU-ID. |
| 255 | Broadcast/unassigned | Broadcast address in PLOAMd; unassigned ONU in PLOAMu. |

**Table 2 Extended_Burst_Length message**

| **Octet** | **Content** | **Description** |
|---|---|---|
| 1 | ONU-ID | Directed message to one ONU or broadcast message to all ONUs. As a broadcast to all ONUs, ONU-ID = 0xFF represents the Extended_Burst_Length message for all ONUs that support 1.24416 Gbit/s upstream line rate and for all ONUs that support 2.48832 Gbit/s upstream line rate, ONU-ID=0xFE represents the Extended_Burst_Length message for all ONUs that support 2.48832 Gbit/s upstream line rate |
| 2 | 00010100 | Message identification "Extended_Burst_Length" (Note 1). |
| 3 | pppppppp | pppppppp= Number of type 3 preamble bytes to be used while the ONU remains in the 'pre-ranged' states: Serial_Number state (O3) and Ranging state (O4). Each byte of the type 3 preamble contains the pattern specified in octet 6 of the Upstream_Overhead message. (Note 2) |
| 4 | rrrrrrrr | rrrrrrrr = Number of type 3 preamble bytes to be used after the ONU enters the Operation state (O5). Each byte of the type 3 preamble contains the pattern specified in Octet 6 of the Upstream_Overhead message. (Note 2) |
| 5 | rate | 0000 000U,where:U-upstream nominal line rate, |
| | | U = 0, 1.24416 Gbit/s; |
| | | U = 1, 2.48832 Gbit/s. |
| 6-12 | Unspecified | Reserved for future study |
| NOTE 1 - The use of Extended_Burst_Length message by the OLT is optional. The support of this message by the ONU is mandatory. | | |
| NOTE 2 - As it is the case with the Upstream_Overhead message, the parameters of the Extended_Burst_Length message, having been received and processed by the ONU once during its activation, continue to mandate the ONU's behavior throughput the activity cycle, i.e., until the ONU is deactivated by the OLT or moves itself into the Standby state (O2). Type 1, 2 and 3 preambles are defined in the message definition and notes of the Upstream_Overhead message (see clause 9.2.3.1). When the Extended_Burst_Length message is not used by the OLT, the length of the Type 3 preamble is determined by subtracting the lengths of the guard bits, types 1 and 2 preambles and delimiter from the recommended burst mode overhead time specified in Appendix I of [ITU-T G.984.2]. If the Extended_Burst_Length message is used, the values specified in octets 3 and 4 of this message supersede the length of the type 3 preamble implied by the "Upstream_Overhead" message. The maximum length of the entire burst mode overhead is 128 bytes. Note that the length of the type 3 preamble is an integer number of bytes. It is the responsibility of the OLT to ensure that the total length of the burst mode overhead (guard bits + type 1 + type 2 + type 3 + delimiter) is also an integer number of bytes. | | |

The specific definition of the Upstream_Overhead message is as shown in Table 3. The first octet of the Upstream_Overhead message can be changed to an ONU-ID. For ONU-ID=255, i.e., supporting upstream rates of 1.24416 Gbit/s and 2.48832 Gbit/s, the specific definition of the added u bit of the 10th octet is that a u bit value of 0 represents an upstream rate of 1.24416 Gbit/s, and a u bit value of 1 represents an upstream rate of 2.48832 Gbit/s. ONU-ID=254 represents an upstream rate of 2.48832 Gbit/s, ignoring the meaning of the u bit in the 10th octet, while carrying and delivering configuration values such as preamble and delimiter for different upstream rates.

**Table 3 Upstream_Overhead message**

| **Octet** | **Content** | **Description** |
|---|---|---|
| 1 | ONU-ID | Directed message to one ONU or broadcast message to all ONUs. As a broadcast to all ONUs, ONU-ID = 0xFF represents the Upstream_Overhead message for all ONUs that support 1.24416 Gbit/s upstream line rate and for all ONUs that support 2.48832 Gbit/s upstream line rate, ONU-ID = 0xFE represents the Upstream_Overhead message for all ONUs that support 2.48832 Gbit/s upstream line rate. |
| 2 | 00000001 | Message identification "Upstream_Overhead". |
| 3 | gggggggg | gggggggg = Number of guard bits. |
| 4 | xxxxxxxx | xxxxxxxx = Number of type 1 preamble bits. Type 1 preamble bits contain the 'all-ones' pattern. This may be set to zero. |
| 5 | yyyyyyyy | yyyyyyyy = Number of type 2 preamble bits. Type 2 preamble bits contain the 'all-zeroes' pattern. This may be set to zero. |
| 6 | cccccccc | cccccccc = Pattern to be used for type 3 preamble bits. (Note 1) |
| 7 | bbbbbbbb | Data to be programmed in delimiter byte 1 (Notes 2 and 3). |
| 8 | bbbbbbbb | Data to be programmed in delimiter byte 2. |
| 9 | bbbbbbbb | Data to be programmed in delimiter byte 3. |
| 10 | xuemsspp | x = Reserved: |
| | | u = 0, 1.24416 Gbit/s; |
| | | u = 1, 2.48832 Gbit/s. |
| | | e = Status of delay pre-equalization mechanism: "0" = No pre-assigned delay, "1" = Use pre-assigned delay given below. m = Status of SN_Mask mechanism: "0" = SN_Mask disabled, "1" = SN_Mask enabled (Note 5). |
| | | ss = Max number of extra SN-transmissions sent in response to a single SN-request. For example, ss = 10 means an ONU will send 3 SN-transmissions when responding to a SN-request (Note 6). |
| | | Default ONU transmit power level mode: |
| | | pp = "00" - Mode 0: Normal. |
| | | pp = "01" - Mode 1: Normal - 3 dB. |
| | | pp = "10" - Mode 2: Normal - 6 dB. |
| | | pp = "11" - Reserved. (Note 4) |
| 11 | dddddddd | MSB of pre-assigned delay (32 byte units). |
| 12 | dddddddd | LSB of pre-assigned delay (32 byte units). |
| NOTE 1 - The length of Type 3 preamble can be calculated by subtracting the number of bits allocated to guard time, type 1 preamble and type 2 preamble, by the Upstream_Overhead message, as well as 24 bits of the delimiter from the total burst mode overhead time specified in Table I.2 of [ITU-T G.984.2] | | |
| The ONU uses the octet 6 pattern to fill the length of type 3 preamble, aligning the MSB of the pattern with the MSB of the preamble, repeating the pattern as many time as necessary, and leaving any partial pattern adjacent to the delimiter. | | |
| NOTE 2 - The delimiter pattern occupies the last 24 bits of the burst mode overhead time. In those cases when the actual delimiter is shorter than 24 bits, it is the responsibility of the OLT to specify the pattern in octet 7 so that its MSB can serve as the latter part of the preamble. | | |
| NOTE 3 - For 16-bit delimiters, these values are proposed: 0x85B3, 0x8C5B, 0xB433, 0xB670 and 0xE6D0. For 20-bit delimiter, 0xB5983 is proposed. | | |
| NOTE 4 - Be mindful that the coding of the power level modes in the upstream overhead message, where 0 is highest and 2 is lowest, is opposite to that in the Serial_Number_ONU message. | | |
| NOTE 5 - As the Serial_Number_Mask message has been deprecated, the m bit shall be set to 0. | | |
| NOTE 6 - As multiple SN transmission method has been effectively deprecated, ss bits shall be set to 00. | | |

In an exemplary embodiment, a value of an M-th octet of the configuration message being a first numerical value indicates 2.5G in the upstream rate set; and the value of the M-th octet of the configuration message being a second numerical value indicates 1.25G in the upstream rate set; wherein the M-th octet of the configuration message is an ONU identifier, and M is a positive integer.

The configuration message in the embodiments of the present disclosure may include multiple forms. For example, in a case where the configuration message includes an Extended_Burst_Length message and an Upstream_Overhead message, a first octet of the Extended_Burst_Length message and a first octet of the Upstream_Overhead message may be changed to an ONU-ID (i.e., ONU identifier). The definition of ONU-ID may be as shown in Table 4, and other suitable values may also be defined, to which the embodiments of the present disclosure impose no limitation. The specific definition of the Extended_Burst_Length message is as shown in Table 5. ONU-ID=255 supports an upstream rate of 1.24416 Gbit/s, and ONU-ID=254 represents an upstream rate of 2.48832 Gbit/s, while carrying and delivering configuration values for different upstream rates.

**Table 4 - ONU-ID values**

| **ONU-ID** | **Designation** | **Comment** |
|---|---|---|
| 0..253 | Assignable | Assigned by OLT at ONU activation; used to identify the sender of an upstream burst or a PLOAMu, and to address PLOAMd |
| 254 | Broadcast/Reserved | Broadcast address in PLOAMd; not used in PLOAMu. The number shall not be assigned to any ONU, and shall not be used as an ONU-ID |
| 255 | Broadcast/unassigned | Broadcast address in PLOAMd; unassigned ONU in PLOAMu |

**Table 5 Extended_Burst_Length message**

| **Octet** | **Content** | **Description** |
|---|---|---|
| 1 | ONU-ID | Directed message to one ONU or broadcast message to all ONUs. As a broadcast to all ONUs, ONU-ID = 0xFF represents the Extended_Burst_Length message for all ONUs that support 1.24416 Gbit/s upstream line rate, ONU-ID = 0xFE represents the Extended_Burst_Length message for all ONUs that support 2.48832 Gbit/s upstream line rate. |
| 2 | 00010100 | Message identification "Extended_Burst_Length" (Note 1). |
| 3 | pppppppp | pppppppp = Number of type 3 preamble bytes to be used while the ONU remains in the 'pre-ranged' states: Serial_Number state (O3) and Ranging state (O4). Each byte of the type 3 preamble contains the pattern specified in octet 6 of the Upstream_Overhead message. (Note 2). |
| 4 | rrrrrrrr | rrrrrrrr = Number of type 3 preamble bytes to be used after the ONU enters the Operation state (O5). Each byte of the type 3 preamble contains the pattern specified in Octet 6 of the Upstream_Overhead message (Note 2). |
| 5-12 | Unspecified | Reserved for future study |
| NOTE 1 - The use of Extended_Burst_Length message by the OLT is optional. The support of this message by the ONU is mandatory. | | |
| NOTE 2 - As it is the case with the Upstream_Overhead message, the parameters of the Extended_Burst_Length message, having been received and processed by the ONU once during its activation, continue to mandate the ONU's behavior throughput the activity cycle, i.e., until the ONU is deactivated by the OLT or moves itself into the Standby state (O2). Type 1, 2 and 3 preambles are defined in the message definition and notes of the Upstream_Overhead message (see clause 9.2.3.1). When the Extended_Burst_Length message is not used by the OLT, the length of the Type 3 preamble is determined by subtracting the lengths of the guard bits, types 1 and 2 preambles and delimiter from the recommended burst mode overhead time specified in Appendix I of [ITU-T G.984.2]. If the Extended_Burst_Length message is used, the values specified in octets 3 and 4 of this message supersede the length of the type 3 preamble implied by the "Upstream_Overhead" message. The maximum length of the entire burst mode overhead is 128 bytes. Note that the length of the type 3 preamble is an integer number of bytes. It is the responsibility of the OLT to ensure that the total length of the burst mode overhead (guard bits + type 1 + type 2 + type 3 + delimiter) is also an integer number of bytes. | | |

The specific definition of the Upstream_Overhead message is as shown in Table 6. ONU-ID=255 supports an upstream rate of 1.24416 Gbit/s; ONU-ID=254 represents an upstream rate of 2.48832 Gbit/s, while carrying and delivering configuration values such as preamble and delimiter for different upstream rates.

**Table 6 Upstream_Overhead message**

| **Octet** | **Content** | **Description** |
|---|---|---|
| 1 | ONU-ID | Directed message to one ONU or broadcast message to all ONUs. As a broadcast to all ONUs, ONU-ID = 0xFF represents the Upstream_Overhead message for all ONUs that support 1.24416 Gbit/s upstream line rate, ONU-ID = 0xFE represents the Upstream_Overhead message for all ONUs that support 2.48832 Gbit/s upstream line rate. |
| 2 | 00000001 | Message identification "Upstream_Overhead". |
| 3 | gggggggg | gggggggg = Number of guard bits. |
| 4 | xxxxxxxx | xxxxxxxx = Number of type 1 preamble bits. Type 1 preamble bits contain the 'all-ones' pattern. This may be set to zero. |
| 5 | yyyyyyyy | yyyyyyyy = Number of type 2 preamble bits. Type 2 preamble bits contain the 'all-zeroes' pattern. This may be set to zero. |
| 6 | cccccccc | cccccccc = Pattern to be used for type 3 preamble bits (Note 1). |
| 7 | bbbbbbbb | Data to be programmed in delimiter byte 1 (Notes 2 and 3). |
| 8 | bbbbbbbb | Data to be programmed in delimiter byte 2. |
| 9 | bbbbbbbb | Data to be programmed in delimiter byte 3. |
| 10 | xxemsspp | xx = Reserved: |
| | | e = Status of delay pre-equalization mechanism: "0" = No pre-assigned delay, "1" = Use pre-assigned delay given below. m = Status of SN_Mask mechanism: "0" = SN_Mask disabled, "1" = SN_Mask enabled (Note 5). |
| | | ss = Max number of extra SN-transmissions sent in response to a single SN-request. For example, ss = 10 means an ONU will send 3 SN-transmissions when responding to a SN-request (Note 6). |
| | | Default ONU transmit power level mode: |
| | | pp = "00" - Mode 0: Normal. |
| | | pp = "01" - Mode 1: Normal - 3 dB. |
| | | pp = "10" - Mode 2: Normal - 6 dB. |
| | | pp = "11" - Reserved. |
| | | (Note 4) |
| 11 | dddddddd | MSB of pre-assigned delay (32 byte units). |
| 12 | dddddddd | LSB of pre-assigned delay (32 byte units). |
| NOTE 1 - The length of Type 3 preamble can be calculated by subtracting the number of bits allocated to guard time, type 1 preamble and type 2 preamble, by the Upstream_Overhead message, as well as 24 bits of the delimiter from the total burst mode overhead time specified in Table I.2 of [ITU-T G.984.2] | | |
| The ONU uses the octet 6 pattern to fill the length of type 3 preamble, aligning the MSB of the pattern with the MSB of the preamble, repeating the pattern as many time as necessary, and leaving any partial pattern adjacent to the delimiter. | | |
| NOTE 2 - The delimiter pattern occupies the last 24 bits of the burst mode overhead time. In those cases when the actual delimiter is shorter than 24 bits, it is the responsibility of the OLT to specify the pattern in octet 7 so that its MSB can serve as the latter part of the preamble. | | |
| NOTE 3 - For 16-bit delimiters, these values are proposed: 0x85B3, 0x8C5B, 0xB433, 0xB670 and 0xE6D0. For 20-bit delimiter, 0xB5983 is proposed. | | |
| NOTE 4 - Be mindful that the coding of the power level modes in the upstream overhead message, where 0 is highest and 2 is lowest, is opposite to that in the Serial_Number_ONU message. | | |
| NOTE 5 - As the Serial_Number_Mask message has been deprecated, the m bit shall be set to 0. | | |
| NOTE 6 - As multiple SN transmission method has been effectively deprecated, ss bits shall be set to 00. | | |

In an exemplary embodiment, a value of an M-th octet of the configuration message being a first numerical value indicates 2.5G in the upstream rate set; the value of the M-th octet of the configuration message being a second numerical value indicates 1.25G in the upstream rate set; and the value of the M-th octet of the configuration message being a fifth numerical value corresponds to 2.5G and 1.25G in the upstream rate set; wherein in a case where the value of the M-th octet of the configuration message is the fifth numerical value, a value of an X-th field of an N-th octet of the configuration message being a third numerical value indicates 2.5G in the upstream rate set, and the value of the X-th field of the N-th octet being a fourth numerical value indicates 1.25G in the upstream rate set; and wherein the M-th octet of the configuration message is an ONU identifier, and M, N, and X are positive integers and M is not equal to N.

The configuration message in the embodiments of the present disclosure may include multiple forms. For example, in a case where the configuration message includes an Extended_Burst_Length message and an Upstream_Overhead message, a first octet of the Extended_Burst_Length message can be changed to an ONU-ID (i.e., ONU identifier). The definition of ONU-ID can be as shown in Table 7, and other suitable values can also be defined, to which the embodiments of the present disclosure impose no limitation.

The specific definition of the Extended_Burst_Length message is as shown in Table 8. ONU-ID=255 supports an upstream rate of 1.24416 Gbit/s; ONU-ID=254 represents an upstream rate of 2.48832 Gbit/s; and ONU-ID=253 represents upstream rates of 1.24416 Gbit/s and 2.48832 Gbit/s. The specific definition of the added 5th octet is as follows: a U bit value of 0 represents an upstream rate of 1.24416 Gbit/s, and a U bit value of 1 represents an upstream rate of 2.48832 Gbit/s. The meaning of the added 5th octet is ignored for the aforementioned ONU-ID=255 or 254, while carrying and delivering configuration values for different upstream rates.

**Table 7 - ONU-ID values**

| **ONU-ID** | **Designation** | **Comment** |
|---|---|---|
| 0..253 | Assignable | Assigned by OLT at ONU activation; used to identify the sender of an upstream burst or a PLOAMu, and to address PLOAMd |
| 254 | Broadcast/Reserved | Broadcast address in PLOAMd; not used in PLOAMu. The number shall not be assigned to any ONU, and shall not be used as an ONU-ID |
| 255 | Broadcast/unassigned | Broadcast address in PLOAMd; unassigned ONU in PLOAMu |

**Table 8 Extended_Burst_Length message**

| **Octe t** | **Content** | **Description** |
|---|---|---|
| 1 | ONU-ID | Directed message to one ONU or broadcast message to all ONUs. As a broadcast to all ONUs, ONU-ID = 0xFF represents the Extended_Burst_Length message for all ONUs that support 1.24416 Gbit/s upstream line rate, ONU-ID = 0xFE represents the Extended_Burst_Length message for all ONUs that support 2.48832 Gbit/s upstream line rate , ONU-ID = 0xFD represents the Extended_Burst_Length message for all ONUs that support 1.24416 Gbit/s upstream line rate and for all ONUs that support 2.48832 Gbit/s upstream line rate. |
| 2 | 00010100 | Message identification "Extended_Burst_Length" (Note 1). |
| 3 | pppppppp | pppppppp= Number of type 3 preamble bytes to be used while the ONU remains in the 'pre-ranged' states: Serial_Number state (O3) and Ranging state (O4). Each byte of the type 3 preamble contains the pattern specified in octet 6 of the Upstream_Overhead message. (Note 2). |
| 4 | rrrrrrrr | rrrrrrrr = Number of type 3 preamble bytes to be used after the ONU enters the Operation state (O5). Each byte of the type 3 preamble contains the pattern specified in Octet 6 of the Upstream_Overhead message (Note 2). |
| 5 | rate | 0000 000U, where: U - upstream nominal line rate, |
| | | U = 0, 1.24416 Gbit/s; |
| | | U = 1, 2.48832 Gbit/s. |
| 6-12 | Unspecified | Reserved for future study. |
| NOTE 1 - The use of Extended_Burst_Length message by the OLT is optional. The support of this message by the ONU is mandatory. | | |
| NOTE 2 - As it is the case with the Upstream_Overhead message, the parameters of the Extended_Burst_Length message, having been received and processed by the ONU once during its activation, continue to mandate the ONU's behavior throughput the activity cycle, i.e., until the ONU is deactivated by the OLT or moves itself into the Standby state (O2). Type 1, 2 and 3 preambles are defined in the message definition and notes of the Upstream_Overhead message (see clause 9.2.3.1). When the Extended_Burst _Length message is not used by the OLT, the length of the Type 3 preamble is determined by subtracting the lengths of the guard bits, types 1 and 2 preambles and delimiter from the recommended burst mode overhead time specified in Appendix I of [ITU-T G.984.2]. If the Extended_Burst_Length message is used, the values specified in octets 3 and 4 of this message supersede the length of the type 3 preamble implied by the "Upstream_Overhead" message. The maximum length of the entire burst mode overhead is 128 bytes. Note that the length of the type 3 preamble is an integer number of bytes. It is the responsibility of the OLT to ensure that the total length of the burst mode overhead (guard bits + type 1 + type 2 + type 3 + delimiter) is also an integer number of bytes. | | |

The specific definition of the Upstream_Overhead message is as shown in Table 9. ONU-ID=255 supports an upstream rate of 1.24416 Gbit/s; ONU-ID=254 represents an upstream rate of 2.48832 Gbit/s; and ONU-ID=253 represents upstream rates of 1.24416 Gbit/s and 2.48832 Gbit/s. The specific definition of the added u bit of the 10th octet is as follows: a u bit value of 0 represents an upstream rate of 1.24416 Gbit/s, and a u bit value of 1 represents an upstream rate of 2.48832 Gbit/s. The meaning of the added u bit in the 10th octet is ignored for the aforementioned ONU-ID=255 or 254, while carrying and delivering configuration values such as preamble and delimiter for different upstream rates.

**Table 9 Upstream_Overhead message**

| **Octet** | **Content** | **Description** |
|---|---|---|
| 1 | ONU-ID | Directed message to one ONU or broadcast message to all ONUs. |
| | | As a broadcast to all ONUs, ONU-ID = 0xFF represents the Upstream_Overhead message for all ONUs that support 1.24416 Gbit/s upstream line rate, ONU-ID = 0xFE represents the Upstream_Overhead message for all ONUs that support 2.48832 Gbit/s upstream line rate, ONU-ID = 0xFD represents the Upstream_Overhead message for all ONUs that support 1.24416 Gbit/s upstream line rate and for all ONUs that support 2.48832 Gbit/s upstream line rate. |
| 2 | 00000001 | Message identification "Upstream_Overhead". |
| 3 | gggggggg | gggggggg = Number of guard bits. |
| 4 | xxxxxxxx | xxxxxxxx = Number of type 1 preamble bits. Type 1 preamble bits contain the 'all-ones' pattern. This may be set to zero. |
| 5 | yyyyyyyy | yyyyyyyy = Number of type 2 preamble bits. Type 2 preamble bits contain the 'all-zeroes' pattern. This may be set to zero. |
| 6 | cccccccc | cccccccc = Pattern to be used for type 3 preamble bits (Note 1). |
| 7 | bbbbbbbb | Data to be programmed in delimiter byte 1 (Notes 2 and 3). |
| 8 | bbbbbbbb | Data to be programmed in delimiter byte 2. |
| 9 | bbbbbbbb | Data to be programmed in delimiter byte 3. |
| 10 | xuemsspp | x = Reserved: |
| | | u = 0, 1.24416 Gbit/s; |
| | | u = 1, 2.48832 Gbit/s. |
| | | e = Status of delay pre-equalization mechanism: "0" = No pre-assigned delay, "1" = Use pre-assigned delay given below. |
| | | m = Status of SN_Mask mechanism: "0" = SN_Mask disabled, "1" = SN_Mask enabled (Note 5). |
| | | ss = Max number of extra SN-transmissions sent in response to a single SN-request. For example, ss = 10 means an ONU will send 3 SN-transmissions when responding to a SN-request (Note 6). |
| | | Default ONU transmit power level mode: |
| | | pp = "00" - Mode 0: Normal. |
| | | pp = "01" - Mode 1: Normal - 3 dB. |
| | | pp = "10" - Mode 2: Normal - 6 dB. |
| | | pp = "11" - Reserved.(Note 4) |
| 11 | dddddddd | MSB of pre-assigned delay (32 byte units). |
| 12 | dddddddd | LSB of pre-assigned delay (32 byte units). |
| NOTE 1 - The length of Type 3 preamble can be calculated by subtracting the number of bits allocated to guard time, type 1 preamble and type 2 preamble, by the Upstream_Overhead message, as well as 24 bits of the delimiter from the total burst mode overhead time specified in Table I.2 of [ITU-T G.984.2] | | |
| The ONU uses the octet 6 pattern to fill the length of type 3 preamble, aligning the MSB of the pattern with the MSB of the preamble, repeating the pattern as many time as necessary, and leaving any partial pattern adjacent to the delimiter. | | |
| NOTE 2 - The delimiter pattern occupies the last 24 bits of the burst mode overhead time. In those cases when the actual delimiter is shorter than 24 bits, it is the responsibility of the OLT to specify the pattern in octet 7 so that its MSB can serve as the latter part of the preamble. | | |
| NOTE 3 - For 16-bit delimiters, these values are proposed: 0x85B3, 0x8C5B, 0xB433, 0xB670 and 0xE6D0. For 20-bit delimiter, 0xB5983 is proposed. | | |
| NOTE 4 - Be mindful that the coding of the power level modes in the upstream overhead message, where 0 is highest and 2 is lowest, is opposite to that in the Serial_Number_ONU message. | | |
| NOTE 5 - As the Serial_Number_Mask message has been deprecated, the m bit shall be set to 0. | | |
| NOTE 6 - As multiple SN transmission method has been effectively deprecated, ss bits shall be set to 00. | | |

In an exemplary embodiment, the OLT sends configuration information to the ONU; wherein the configuration information is used for setting one or more Bandwidth Map (BWmap) partitions for the ONU; wherein a maximum number of allocation structures for each of the one or more BWmap partitions is D, in a case of constructing a BWmap for each Physical Layer Frame (PHY), the ONU is instructed to define a plurality of different burst allocation sequences in the one or more BWmap partitions according to an ascending order of a start time, a value range of the start time is 0 to 19438, a maximum number of allocation structures in each of the one or more BWmap partitions is W, a maximum number of allocation structures in each of the burst allocation sequences is Y, a maximum number of allocation structures of the ONU in the one or more BWmap partitions is Z, and a maximum number of burst allocation sequences of the ONU in the BWmap is U; wherein D, W, Y, Z and U are variables.

It should be noted that, in this embodiment, based on the aforementioned additional restrictions existing when constructing the BWmap for each PHY frame, different numerical values can be assigned to the variables D, W, Y, Z, and U. For example, if a maximum number of allocation structures in one burst allocation sequence is Y=8, and a maximum number of allocation structures for each given ONU in the BWmap is Z=64, then a maximum number of burst allocation sequences for each given ONU in the BWmap is Z/Y=8. If a maximum number of burst allocation sequences for each given ONU in the BWmap is U=8, and a maximum number of allocation structures for each given ONU in the BWmap is Z=64, then a maximum number of allocation structures in one burst allocation sequence is Z/U=8. If a maximum number of allocation structures in one burst allocation sequence is Y=16, and a maximum number of allocation structures for each given ONU in the BWmap is Z=64, then a maximum number of burst allocation sequences for each given ONU in the BWmap is Z/Y=4. If a maximum number of burst allocation sequences for each given ONU in the BWmap is U= 16, and a maximum number of allocation structures for each given ONU in the BWmap is Z=64, then a maximum number of allocation structures in one burst allocation sequence is Z/U=4. If each BWmap partition can contain a maximum of D=2047 allocation structures, and a maximum number of allocation structures for each given ONU in the BWmap is Z=64, then a maximum number of ONUs is D/Z=32.

In an exemplary embodiment, the OLT allocates a Serial Number (SN) request bandwidth to an ONU, and the OLT receives a first message sent by the ONU in response to the SN request bandwidth; wherein in a case where an allocation identifier of the SN request bandwidth is a preset value, a difference between a stop time and a start time of receiving the first message by the OLT is a sixth numerical value or a seventh numerical value.

For an SN request bandwidth response, when the allocated allocid (bandwidth allocation identifier) is 253, 254, or 255 (or other suitable values), the values of StartTime (start time) and StopTime (end time) satisfy the requirements shown in Table 10, that is, the difference between StartTime and StopTime is 6 or 12.

**Table 10 SN request bandwidth**

| Bandwidth request mode | allocid | StopTime-StartTime |
|---|---|---|
| SN | 253 | 6 or 12 |
| | 254 | 6 or 12 |
| | 255 | 6 or 12 |

In an exemplary embodiment, the OLT allocates a ranging request bandwidth to an ONU, and the OLT receives a second message sent by the ONU in response to the ranging request bandwidth; wherein in a case where an allocation identifier of the ranging request bandwidth is equal to an ONU identifier, a difference between a stop time and a start time of receiving the second message by the OLT is a sixth numerical value or a seventh numerical value.

For a ranging request bandwidth response, when the allocated allocid (bandwidth allocation identifier) is equal to the ONU-ID, the values of StartTime and StopTime also satisfy the requirements shown in Table 11, that is, the difference between StartTime and StopTime is 6 or 12.

**Table 11 Ranging request bandwidth**

| Bandwidth request mode | allocid | StopTime-StartTime |
|---|---|---|
| Ranging | Equal to ONU-ID | 6 or 12 |

In an exemplary embodiment, the OLT receives a demand for bandwidth from the ONU, and performs bandwidth allocation for the ONU; or, the OLT performs bandwidth allocation for the ONU according to a demand for bandwidth from a Wireless Local Area Network (WLAN) air interface.

In an exemplary embodiment of the present disclosure, the OLT performs bandwidth allocation for the ONU by utilizing a Dynamic Bandwidth Allocation (DBA) function for bandwidth allocation. Bandwidth allocation may be adjusted according to the Wireless Local Area Network (WLAN) usage of the master/slave Fiber to the Room (FTTR) devices, i.e., bandwidth can be allocated based on the WLAN usage, or future bandwidth usage reported by the slave device, and the demand for bandwidth from the WLAN air interface. For example, when WLAN service demand traffic occupies a large amount, the corresponding allocation structure is identified according to the WLAN service correspondence, and uplink scheduling information, such as needing to allocate more bandwidth, is provided. Upon receiving such uplink scheduling information, the master device performs a corresponding increase in bandwidth allocation.

Through the embodiments of the present disclosure, since the OLT sends a configuration message to the ONU, wherein the configuration message is used for indicating an upstream rate from the ONU to the OLT in an upstream rate set, and the upstream rates in the upstream rate set not only include 1.25G but also include 2.5G, the problem in the related technologies that an ONU cannot operate at an upstream rate of 2.5G can be solved, thereby achieving the effect that the OLT can indicate to the ONU an upstream rate of 1.25G or 2.5G from the ONU to the OLT in an upstream rate set including 1.25G and 2.5G.

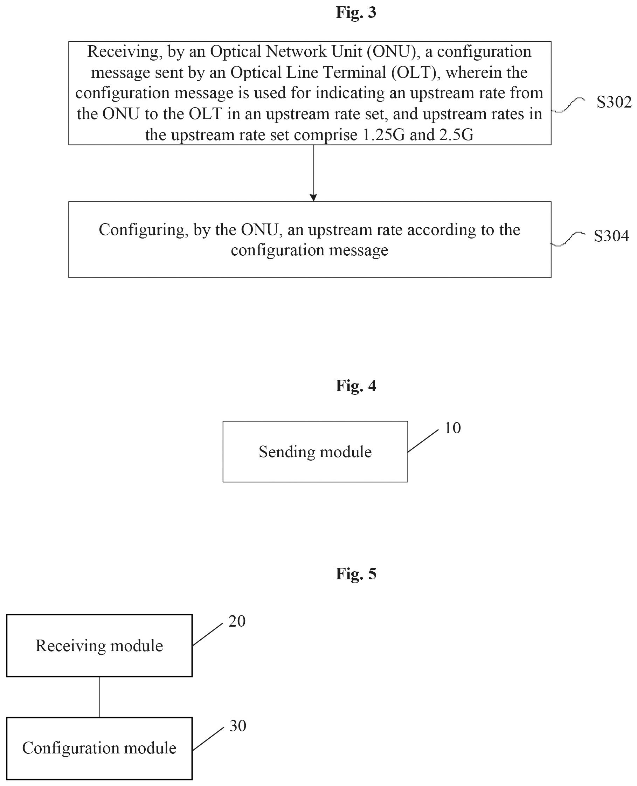

Fig. 3 is a flowchart of a rate configuration executing method according to another embodiment of the present disclosure. As shown in Fig. 3, the process includes the following operations S302 and S304.

In operation S302, an Optical Network Unit (ONU) receives a configuration message sent by an Optical Line Terminal (OLT), wherein the configuration message is used for indicating an upstream rate from the ONU to the OLT in an upstream rate set, and upstream rates in the upstream rate set include 1.25G and 2.5G.

In operation S302 of this embodiment, the configuration message includes: an Extended_Burst_Length message, an Upstream_Overhead message, or a custom private message.

In an exemplary embodiment, a value of an M-th octet of the configuration message being a first numerical value corresponds to 2.5G and 1.25G in the upstream rate set; and the value of the M-th octet of the configuration message being a second numerical value indicates 2.5G in the upstream rate set; wherein in a case where the value of the M-th octet of the configuration message is the first numerical value, a value of an X-th field of an N-th octet of the configuration message being a third numerical value indicates 2.5G in the upstream rate set, and the value of the X-th field of the N-th octet being a fourth numerical value indicates 1.25G in the upstream rate set; and wherein the M-th octet of the configuration message is an ONU identifier, and M and N are positive integers and M is not equal to N.

In an exemplary embodiment, a value of an M-th octet of the configuration message being a first numerical value indicates 2.5G in the upstream rate set; and the value of the M-th octet of the configuration message being a second numerical value indicates 1.25G in the upstream rate set; wherein the M-th octet of the configuration message is an ONU identifier, and M is a positive integer.

In an exemplary embodiment, a value of an M-th octet of the configuration message being a first numerical value indicates 2.5G in the upstream rate set; the value of the M-th octet of the configuration message being a second numerical value indicates 1.25G in the upstream rate set; and the value of the M-th octet of the configuration message being a fifth numerical value corresponds to 2.5G and 1.25G in the upstream rate set; wherein in a case where the value of the M-th octet of the configuration message is the fifth numerical value, a value of an X-th field of an N-th octet of the configuration message being a third numerical value indicates 2.5G in the upstream rate set, and the value of the X-th field of the N-th octet being a fourth numerical value indicates 1.25G in the upstream rate set; and wherein the M-th octet of the configuration message is an ONU identifier, and M, N and X are positive integers and M is not equal to N.

In an exemplary embodiment, the method further includes: receiving, by the ONU, configuration information sent by the OLT; wherein the configuration information is used for setting one or more Bandwidth Map (BWmap) partitions for the ONU; wherein a maximum number of allocation structures for each of the one or more BWmap partitions is D, in a case of constructing a BWmap for each Physical Layer Frame (PHY), the ONU is instructed to define a plurality of different burst allocation sequences in the one or more BWmap partitions according to an ascending order of a start time, a value range of the start time is 0 to 19438, a maximum number of allocation structures in each of the one or more BWmap partitions is W, a maximum number of allocation structures in each of the burst allocation sequences is Y, a maximum number of allocation structures of the ONU in the one or more BWmap partitions is Z, and a maximum number of burst allocation sequences of the ONU in the BWmap is U; wherein D, W, Y, Z and U are variables.

In an exemplary embodiment, the method further includes: receiving, by the ONU, a Serial Number (SN) request bandwidth allocated by the OLT, and sending, by the ONU, a first message to the OLT in response to the SN request bandwidth; wherein in a case where an allocation identifier of the SN request bandwidth is a preset value, a difference between a stop time and a start time of sending the first message by the ONU is a sixth numerical value or a seventh numerical value.

In an exemplary embodiment, the method further includes: receiving, by the ONU, a ranging request bandwidth sent by the OLT, and sending, by the ONU, a second message to the OLT in response to the ranging request bandwidth; wherein in a case where an allocation identifier of the ranging request bandwidth is equal to an ONU identifier, a difference between a stop time and a start time of sending the second message by the ONU is a sixth numerical value or a seventh numerical value.

In an exemplary embodiment, the method further includes: sending, by the ONU, a demand for bandwidth to the OLT.

In operation S304, the ONU configures an upstream rate according to the configuration message.

In the embodiments of the present disclosure, through sending a configuration message to the ONU by the OLT, configurations such as preamble and delimiter carried by different upstream rates can be determined through the configuration message, thereby achieving 2.5G symmetry. In addition, additional restrictions are applied on each BWmap partition, and bandwidth allocation mechanisms are enhanced.

With the description of the above implementations, those skilled in the art can clearly understand that the method according to the above embodiments can be implemented by means of software plus a necessary general hardware platform, and certainly can also be implemented by hardware, but in many cases the former is a better implementation. Based on such understanding, the technical solution of the present disclosure essentially or the part contributing to the existing technology can be embodied in the form of a software product, which is stored in a storage medium (such as ROM/RAM, magnetic disk, optical disc), and includes several instructions to enable a terminal device (which can be a mobile phone, a computer, a server, or a network device, etc.) to execute the methods described in the various embodiments of the present disclosure.

In the embodiments of the present disclosure, a rate configuration sending device and a rate configuration executing device are provided, configured to implement the above embodiments and exemplary implementations. Descriptions that have been provided are not repeated. As used below, the term "module" can implement a combination of software and/or hardware with a predetermined function. Although the devices described in the following embodiments are preferably implemented by software, implementation by hardware, or a combination of software and hardware is also possible and contemplated.

Fig. 4 is a structure block diagram of a rate configuration sending device according to an embodiment of the present disclosure. As shown in Fig. 4, the rate configuration sending device includes: a sending module 10, configured to send a configuration message to an Optical Network Unit (ONU), wherein the configuration message is used for indicating an upstream rate from the ONU to an Optical Line Terminal (OLT) in an upstream rate set, and upstream rates in the upstream rate set include 1.25G and 2.5G.

Fig. 5 is a structure block diagram of a rate configuration executing device according to another embodiment of the present disclosure. As shown in Fig. 5, the rate configuration executing device includes: a receiving module 20 and a configuration module 30.

The receiving module 20 is configured to receive a configuration message sent by an Optical Line Terminal (OLT).

The configuration module 30 is configured to configure an upstream rate according to the configuration message,
wherein the configuration message is used for indicating an upstream rate from an Optical Network Unit (ONU) to the OLT in an upstream rate set, and upstream rates in the upstream rate set include 1.25G and 2.5G.

It should be noted that each of the above modules can be implemented by software or hardware. For the latter, it can be implemented by, but not limited to, the following manner: the above modules are all located in the same processor; or, each of the above modules is located in different processors in any combination.

To facilitate understanding of the technical solutions provided in the embodiments of the present disclosure, specific scenario-based embodiments will be elaborated below.

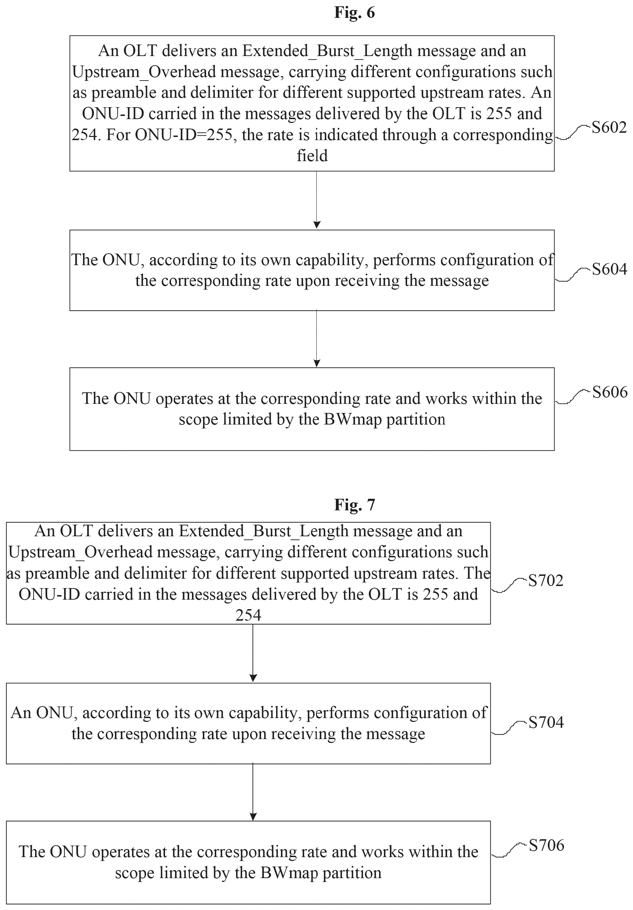

Fig. 6 is a flowchart of a method for achieving 2.5G symmetry in an FTTR scenario I according to an embodiment of the present disclosure. As shown in Fig. 6, the method includes the following operations S602 to S606.

In operation S602, an OLT delivers an Extended_Burst_Length message and an Upstream_Overhead message, carrying different configurations such as preamble and delimiter for different supported upstream rates. An ONU-ID carried in the messages delivered by the OLT is 255 and 254. For ONU-ID=255, the rate is indicated through a corresponding field.

In operation S604, the ONU, according to its own capability, performs configuration of the corresponding rate upon receiving the message.

Specifically, the ONU interprets a received message with an ONU-ID of 255 as supporting both upstream rates of 1.24416 Gbit/s and 2.48832 Gbit/s, and subsequently determining the specific rate based on a value in a designated field of the received message; the ONU interprets a received message with an ONU-ID of 254 as directly configuring an upstream rate of 2.48832 Gbit/s. The SN and ranging request bandwidth responses should meet the specified requirements.

In operation S606, the ONU operates at the corresponding rate and works within the scope limited by the BWmap partition.

Optionally, bandwidth allocation is performed in a Collaboration (CO) DBA manner.

Fig. 7 is a flowchart of a method for achieving 2.5G symmetry in an FTTR scenario II according to an embodiment of the present disclosure. As shown in Fig. 7, the method includes the following operations S702 to S706.

In operation S702, an OLT delivers an Extended_Burst_Length message and an Upstream_Overhead message, carrying different configurations such as preamble and delimiter for different supported upstream rates. The ONU-ID carried in the messages delivered by the OLT is 255 and 254.

In operation S704, an ONU, according to its own capability, performs configuration of the corresponding rate upon receiving the message.

Specifically, the ONU interprets a received message with an ONU-ID of 255 as configuring an upstream rate of 1.24416 Gbit/s; the ONU interprets a received message with an ONU-ID of 254 as configuring an upstream rate of 2.48832 Gbit/s. The SN and ranging request bandwidth responses should meet the specified requirements.

In operation S706, the ONU operates at the corresponding rate and works within the scope limited by the BWmap partition.

Optionally, bandwidth allocation is performed in a Collaboration (CO) DBA manner.

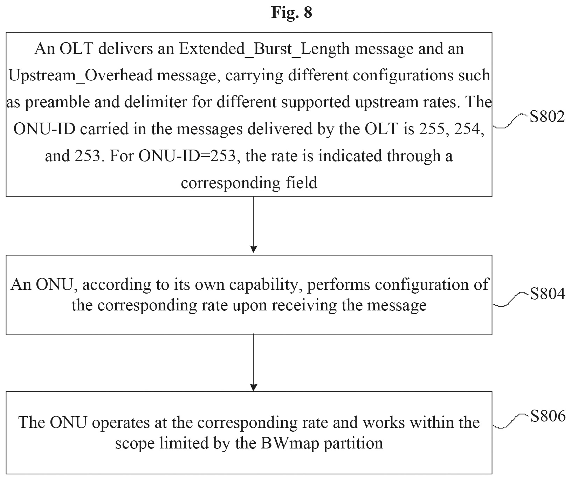

Fig. 8 is a flowchart of a method for achieving 2.5G symmetry in an FTTR scenario III according to an embodiment of the present disclosure. As shown in Fig. 8, the method includes the following operations S802 to S806.

In operation S802, an OLT delivers an Extended_Burst_Length message and an Upstream_Overhead message, carrying different configurations such as preamble and delimiter for different supported upstream rates. The ONU-ID carried in the messages delivered by the OLT is 255, 254, and 253. For ONU-ID=253, the rate is indicated through a corresponding field.

In operation S804, an ONU, according to its own capability, performs configuration of the corresponding rate upon receiving the message.

Specifically, the ONU interprets a received message with an ONU-ID of 255 as configuring an upstream rate of 1.24416 Gbit/s; the ONU interprets a received message with an ONU-ID of 254 as configuring an upstream rate of 2.48832 Gbit/s; and the ONU interprets a received message with an ONU-ID of 253 as supporting both upstream rates of 1.24416 Gbit/s and 2.48832 Gbit/s, and subsequently determining the specific rate based on a value in a designated field of the received message. The SN and ranging request bandwidth responses should meet the specified requirements.

In operation S806, the ONU operates at the corresponding rate and works within the scope limited by the BWmap partition.

Optionally, bandwidth allocation is performed in a Collaboration (CO) DBA manner.

The embodiments of the present disclosure further provide a computer-readable storage medium. The computer-readable storage medium stores a computer program, wherein the computer program is configured to execute the operations of any one of the method embodiments when running.

In an exemplary embodiment, the above computer-readable storage medium may include, but is not limited to: a U disk, a Read-Only Memory (ROM), a Random Access Memory (RAM), a mobile hard disk, a magnetic disk, or an optical disc, and various media capable of storing computer programs.

The embodiments of the present disclosure further provide an electronic device, including a memory and a processor. The memory stores a computer program, and the processor is configured to run the computer program to execute the operations of any one of the method embodiments.

In an exemplary embodiment, the above electronic device may further include a transmission device and an input/output device, wherein the transmission device is connected to the processor, and the input/output device is connected to the processor.

Specific examples in this embodiment can refer to the examples described in the above embodiments and exemplary implementations, which are not repeated herein.

In the embodiments of the present disclosure, 2.5G symmetry is achieved by the OLT delivering the Extended_Burst_Length message and the Upstream_Overhead message to determine configurations such as preamble and delimiter carried by different upstream rates.

Obviously, those skilled in the art should understand that each module or each operation of the present disclosure described above can be implemented by a general-purpose computing device. They can be concentrated on a single computing device or distributed across a network composed of multiple computing devices. They can be implemented by program code executable by the computing device, so that they can be stored in a storage device and executed by the computing device, and in some cases, the operations shown or described can be performed in an order different from that described herein, or they can be separately made into individual integrated circuit modules, or multiple modules or operations of them can be made into a single integrated circuit module for implementation. Thus, the present disclosure is not limited to any specific combination of hardware and software.

The above descriptions are only exemplary embodiments of the present disclosure and are not intended to limit the present disclosure. For those skilled in the art, various modifications and changes can be made to the present disclosure. Any modifications, equivalent replacements, improvements, etc., made within the principles of the present disclosure shall fall within the protection scope of the present disclosure.

## Claims

1. A rate configuration sending method, comprising:
sending, by an Optical Line Terminal, OLT, a configuration message to an Optical Network Unit, ONU,
wherein the configuration message is used for indicating an upstream rate from the ONU to the OLT in an upstream rate set, and upstream rates in the upstream rate set comprise 1.25G and 2.5G.

2. The rate configuration sending method according to claim 1, wherein the configuration message comprises: an Extended_Burst_Length message, an Upstream_Overhead message, or a custom private message.

3. The rate configuration sending method according to claim 1, wherein a value of an M-th octet of the configuration message being a first numerical value corresponds to 2.5G and 1.25G in the upstream rate set; and
the value of the M-th octet of the configuration message being a second numerical value indicates 2.5G in the upstream rate set;
wherein in a case where the value of the M-th octet of the configuration message is the first numerical value, a value of an X-th field of an N-th octet of the configuration message being a third numerical value indicates 2.5G in the upstream rate set, and the value of the X-th field of the N-th octet being a fourth numerical value indicates 1.25G in the upstream rate set; and
wherein the M-th octet of the configuration message is an ONU identifier, and M and N are positive integers and M is not equal to N.

4. The rate configuration sending method according to claim 1, wherein a value of an M-th octet of the configuration message being a first numerical value indicates 2.5G in the upstream rate set; and
the value of the M-th octet of the configuration message being a second numerical value indicates 1.25G in the upstream rate set;
wherein the M-th octet of the configuration message is an ONU identifier, and M is a positive integer.

5. The rate configuration sending method according to claim 1, wherein a value of an M-th octet of the configuration message being a first numerical value indicates 2.5G in the upstream rate set;
the value of the M-th octet of the configuration message being a second numerical value indicates 1.25G in the upstream rate set; and
the value of the M-th octet of the configuration message being a fifth numerical value corresponds to 2.5G and 1.25G in the upstream rate set;
wherein in a case where the value of the M-th octet of the configuration message is the fifth numerical value, a value of an X-th field of an N-th octet of the configuration message being a third numerical value indicates 2.5G in the upstream rate set, and the value of the X-th field of the N-th octet being a fourth numerical value indicates 1.25G in the upstream rate set; and
wherein the M-th octet of the configuration message is an ONU identifier, and M, N and X are positive integers and M is not equal to N.

6. The rate configuration sending method according to claim 1, further comprising:
sending, by the OLT, configuration information to the ONU;
wherein the configuration information is used for setting one or more Bandwidth Map, BWmap, partitions for the ONU;
wherein a maximum number of allocation structures for each of the one or more BWmap partitions is D, in a case of constructing a BWmap for each Physical Layer Frame, PHY, the ONU is instructed to define a plurality of different burst allocation sequences in the one or more BWmap partitions according to an ascending order of a start time, a value range of the start time is 0 to 19438, a maximum number of allocation structures in each of the one or more BWmap partitions is W, a maximum number of allocation structures in each of the burst allocation sequences is Y, a maximum number of allocation structures of the ONU in the one or more BWmap partitions is Z, and a maximum number of burst allocation sequences of the ONU in the BWmap is U;
wherein D, W, Y, Z and U are variables.

7. The rate configuration sending method according to claim 6, further comprising:
allocating, by the OLT, a Serial Number, SN, request bandwidth to the ONU, and receiving, by the OLT, a first message sent by the ONU in response to the SN request bandwidth;
wherein in a case where an allocation identifier of the SN request bandwidth is a preset value, a difference between a stop time and a start time of receiving the first message by the OLT is a sixth numerical value or a seventh numerical value.

8. The rate configuration sending method according to claim 6, further comprising:
allocating, by the OLT, a ranging request bandwidth to the ONU, and receiving, by the OLT, a second message sent by the ONU in response to the ranging request bandwidth;
wherein in a case where an allocation identifier of the ranging request bandwidth is equal to an ONU identifier, a difference between a stop time and a start time of receiving the second message by the OLT is a sixth numerical value or a seventh numerical value.

9. The rate configuration sending method according to claim 1, further comprising:
receiving, by the OLT, a demand for bandwidth from the ONU, and performing bandwidth allocation for the ONU; or
performing, by the OLT, bandwidth allocation for the ONU according to a demand for bandwidth from a Wireless Local Area Network, WLAN, air interface.

10. A rate configuration executing method, comprising:
receiving, by an Optical Network Unit, ONU, a configuration message sent by an Optical Line Terminal, OLT; and
configuring, by the ONU, an upstream rate according to the configuration message,
wherein the configuration message is used for indicating an upstream rate from the ONU to the OLT in an upstream rate set, and upstream rates in the upstream rate set comprise 1.25G and 2.5G.

11. The rate configuration executing method according to claim 10, wherein the configuration message comprises: an Extended_Burst_Length message, an Upstream_Overhead message, or a custom private message.

12. The rate configuration executing method according to claim 10, wherein a value of an M-th octet of the configuration message being a first numerical value corresponds to 2.5G and 1.25G in the upstream rate set; and
the value of the M-th octet of the configuration message being a second numerical value indicates 2.5G in the upstream rate set;
wherein in a case where the value of the M-th octet of the configuration message is the first numerical value, a value of an X-th field of an N-th octet of the configuration message being a third numerical value indicates 2.5G in the upstream rate set, and the value of the X-th field of the N-th octet being a fourth numerical value indicates 1.25G in the upstream rate set; and
wherein the M-th octet of the configuration message is an ONU identifier, and M and N are positive integers and M is not equal to N.

13. The rate configuration executing method according to claim 10, wherein a value of an M-th octet of the configuration message being a first numerical value indicates 2.5G in the upstream rate set; and
the value of the M-th octet of the configuration message being a second numerical value indicates 1.25G in the upstream rate set;
wherein the M-th octet of the configuration message is an ONU identifier, and M is a positive integer.

14. The rate configuration executing method according to claim 10, wherein a value of an M-th octet of the configuration message being a first numerical value indicates 2.5G in the upstream rate set;
the value of the M-th octet of the configuration message being a second numerical value indicates 1.25G in the upstream rate set; and
the value of the M-th octet of the configuration message being a fifth numerical value corresponds to 2.5G and 1.25G in the upstream rate set;
wherein in a case where the value of the M-th octet of the configuration message is the fifth numerical value, a value of an X-th field of an N-th octet of the configuration message being a third numerical value indicates 2.5G in the upstream rate set, and the value of the X-th field of the N-th octet being a fourth numerical value indicates 1.25G in the upstream rate set; and
wherein the M-th octet of the configuration message is an ONU identifier, and M, N and X are positive integers and M is not equal to N.

15. The rate configuration executing method according to claim 10, further comprising:
receiving, by the ONU, configuration information sent by the OLT;
wherein the configuration information is used for setting one or more Bandwidth Map, BWmap, partitions for the ONU;
wherein a maximum number of allocation structures for each of the one or more BWmap partitions is D, in a case of constructing a BWmap for each Physical Layer Frame, PHY, the ONU is instructed to define a plurality of different burst allocation sequences in the one or more BWmap partitions according to an ascending order of a start time, a value range of the start time is 0 to 19438, a maximum number of allocation structures in each of the one or more BWmap partitions is W, a maximum number of allocation structures in each of the burst allocation sequences is Y, a maximum number of allocation structures of the ONU in the one or more BWmap partitions is Z, and a maximum number of burst allocation sequences of the ONU in the BWmap is U;
wherein D, W, Y, Z and U are variables.

16. The rate configuration executing method according to claim 15, further comprising:
receiving, by the ONU, a Serial Number, SN, request bandwidth allocated by the OLT, and sending, by the ONU, a first message to the OLT in response to the SN request bandwidth;
wherein in a case where an allocation identifier of the SN request bandwidth is a preset value, a difference between a stop time and a start time of sending the first message by the ONU is a sixth numerical value or a seventh numerical value.

17. The rate configuration executing method according to claim 15, further comprising:
receiving, by the ONU, a ranging request bandwidth sent by the OLT, and sending, by the ONU, a second message to the OLT in response to the ranging request bandwidth;
wherein in a case where an allocation identifier of the ranging request bandwidth is equal to an ONU identifier, a difference between a stop time and a start time of sending the second message by the ONU is a sixth numerical value or a seventh numerical value.

18. The rate configuration executing method according to claim 10, further comprising:
sending, by the ONU, a demand for bandwidth to the OLT.

19. A rate configuration sending device, comprising:
a sending module, configured to send a configuration message to an Optical Network Unit, ONU, wherein the configuration message is used for indicating an upstream rate from the ONU to an Optical Line Terminal, OLT, in an upstream rate set, and upstream rates in the upstream rate set comprise 1.25G and 2.5G.

20. A rate configuration executing device, comprising:
a receiving module, configured to receive a configuration message sent by an Optical Line Terminal, OLT; and
a configuration module, configured to configure an upstream rate according to the configuration message,
wherein the configuration message is used for indicating an upstream rate from an Optical Network Unit, ONU, to the OLT in an upstream rate set, and upstream rates in the upstream rate set comprise 1.25G and 2.5G.

21. A computer-readable storage medium, storing a computer program therein, wherein the computer program, when executed by a processor, causes the processor to implement operations of the rate configuration sending method according to any one of claims 1 to 9, or implement operations of the rate configuration executing method according to any one of claims 10 to 18.

22. An electronic device, comprising a memory, a processor, and a computer program stored on the memory and executable on the processor, wherein the processor, when executing the computer program, implements operations of the rate configuration sending method according to any one of claims 1 to 9, or implements operations of the rate configuration executing method according to any one of claims 10 to 18.
